Europäisches Patentamt

European Patent Office

Office européen des brevets

(19)

(11) Numéro de publication: **0 050 175**
**B1**

(12) **FASCICULE DE BREVET EUROPEEN**

(45) Date de publication du fascicule du brevet: **14.05.86**

(51) Int. Cl.⁴: **G 03 B 21/11**

(21) Numéro de dépôt: **80401474.4**

(22) Date de dépôt: **16.10.80**

(54) **Appareil de projection pour visionner des cassettes de microfilm.**

(43) Date de publication de la demande:
**28.04.82 Bulletin 82/17**

(45) Mention de la délivrance du brevet:
**14.05.86 Bulletin 86/20**

(84) Etats contractants désignés:
**AT BE CH DE GB IT LI LU NL SE**

(56) Documents cités:
**DE-A-2 105 008**
**DE-A-2 141 524**
**DE-A-2 363 133**
**FR-A-2 080 487**
**GB-A-2 011 118**

(73) Titulaire: **Ausseil, Dominique**
**16, Allée de la Teurtais**
**F-35300 Fougeres (FR)**

(72) Inventeur: **Ausseil, Dominique**
**16, Allée de la Teurtais**
**F-35300 Fougeres (FR)**

(74) Mandataire: **Le Guen, Louis François**
**Cabinet Louis Le Guen 1, avenue Edouard VII**
**B.P. 91**
**F-35802 Dinard Cédex (FR)**

Courier Press, Leamington Spa, England.

EP 0 050 175 B1

## Description

La présente invention concerne un appareil de lecture de cassettes de microfilm qui peuvent y être placées ou retirées sans avoir à réembobiner le film. Elle concerne également des moyens permettant de procéder, avec un tel appareil et de telles cassettes, à une recherche aléatoire.

Les cassettes de microfilm comportant deux magasins et les appareils pour les lire sont connus. Une telle cassette et un tel appareil sont décrits dans le document GB—A—2 011 118. La cassette, semblable à une cassette de bande magnétique, est pourvue de deux magasins comportant chacun en leur centre un axe de bobine, la largeur de la cassette étant légèrement supérieure à celle du microfilm, les deux magasins étant réunis par une paire de plaques séparées, prolongeant les parois des magasins de manière que le film passe entre les deux plaques, la zone centrale des deux plaques étant transparente. Une cassette du même type est décrite dans le document DE—A—2 141 524.

Dans le document GB—A—2 011 118, l'appareil d'utilisation de la cassette comporte, en plus des dispositifs optiques classiques, un châssis avec deux axes capables d'entraîner les axes des bobines des magasins de la cassette, tout comme celui décrit dans le document DE—A—2 141 524. Dans ces appareils, le film est déplace longitudinalement par rapport à l'organe de projection par des moyens classiques.

Dans le document GB—A—2 011 118, le châssis peut être déplacé dans le sens transversal, mais uniquement manuellement. La précision du positionnement transversal est donc fonction de l'habileté de l'opérateur.

Un objet de la présente invention consiste à prévoir, en plus du défilement longitudinal du film, un déplacement transversal de la cassette qui est obtenu par des moyens mécaniques précis, qui peuvent être automatisés.

Un autre objet de la présente invention consiste à prévoir des objectifs de différents grossissements permettant de visionner une partie plus ou moins grande du microfilm.

Conformément à l'invention, les objets mentionnés ci-dessus, ainsi que d'autres, sont atteints par la miss en oeuvre des combinaisons de moyens définies dans la partie caractérisante de la revendication principale complétée par les revendications dépendantes.

Les objets et caractéristiques de la présente invention mentionnés ci-dessus, ainsi que d'autres, apparaîtront plus clairement à la lecture de la description suivante d'une exemple de réalisation ladite description étant faite en relation avec les dessins joints, parmi lesquels:

la Fig. 1 est une vue schématique en perspective d'une cassette de microfilm suivant l'invention,

la Fig. 2 est une vue schématique en coupe de l'appareil de la Fig. 2,

la Fig. 3 est une vue schématique en coupe de l'appareil de projection,

la Fig. 4 est une vue schématique en perspective d'un berceau de cassette utilisé dans l'appareil de la Fig. 2,

la Fig. 5 est une vue de face du berceau de la Fig. 4,

la Fig. 6 est une vue schématique en plan d'un châssis prévu pour le berceau de la Fig. 4, dans l'appareil de la Fig. 2,

la Fig. 7 est une vue partielle schématique du berceau de la Fig. 6, avec une position d'engrenage commutée, et

la Fig. 8 est une vue en coupe transversale du châssis de la Fig. 6, le long de la ligne VIII—VIII.

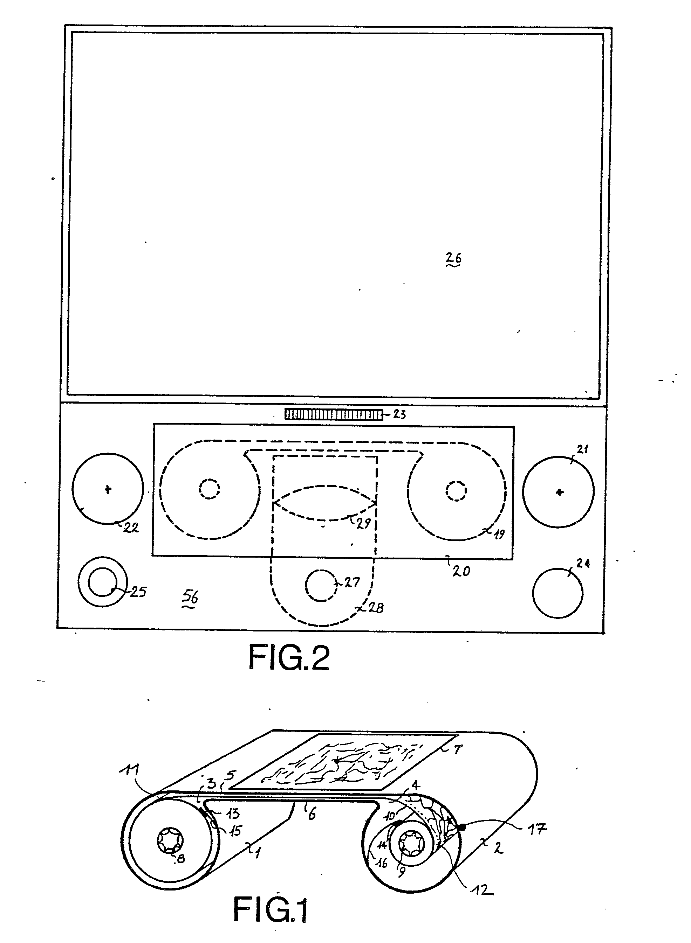

La cassette de la Fig. 1 est formée de deux cylindres partiels 1 et 2, fermés à leurs extrémités non visibles et comportant l'un une fente 3 et l'autre une fente 4, le long de génératrices, les fentes des lèvres de 3 et 4 étant respectivement réunies par des plaques 5 et 6. En leurs centres, comme le délimite le rectangle 7, les plaques 5 et 6 sont transparentes.

Aux centres des plaques de fermeture, non montrées, des cylindres 1 et 2, sont prévus des paliers, non montrés, dans lesquels sont montés des axes de bobine 8 et 9. Les axes 8 et 9 sont creux, avec des cannelures longitudinales à l'intérieur pour permettre leur entraînement. Le film 10 qui passe entre les plaques 5 et 6 forme deux bobines 11 et 12 respectivement autour des axes 8 et 9. L'espace entre les plaques 5 et 6 est réduit de manière à ce que les plaques servent de presse-film, en positionnant le film avec précision dans le trajet optique.

Bien entendu, l'espace existant entre les deux cylindres 1 et 2, au-dessous de la zone 7, doit être libre de tout obstacle opaque pour laisser passer la lumière. Les plaques de fermeture arrière, non montrées, sont réunies pour un voile qui ferment les lèvres entre les plaques 5 et 6. Un tel voile est aussi prévu sur la face avant pour rendre la cassette étanche aux poussières.

A l'intérieur des cylindres, des feutres 13 et 14, respectivement portés par des ressorts 15 et 16, sont respectivement montés, d'un manière appropriée, pour assurer le serrage des spires des bobines 11 et 12, et empêcher un déroulement intempestif du film. Un autre système de freinage et d'étanchéité des bobines peut être réalisé par deux joints toriques par bobines montés respectivement aux bouts des axes des bobines et étant en butée sur les voiles avant et arrière.

A la surface extérieure de chacun des cylindres 1 et 2, est prévu un endroit approprié, qui peut être choisi proche de l'avant de la cassette comme l'indique la Fig. 1, un creux 17 destiné à coopérer avec une bille de verrouillage, que l'on verra dans la suite.

Dans la vue de l'appareil de projection de la Fig. 2, on reconnaît une cassette 19, identique à celle de la Fig. 1, laquelle est introduite et maintenue dans un boîtier, dont l'ouverture est protégée par un volet 20. La face avant de l'appareil comporte encore un bouton 21 de commande de défilement du film de la cassette 19, un bouton 22 de commande de translation de la cassette d'avant en arrière (et vice versa) dans un boîtier, un bouton 23 de réglage de l'objectif de l'appareil, un bouton marche-arrêt 24 permettant également le réglage de l'intensité lumineuse, un voyant de marche 25 et un écran 26. Sur la Fig. 2, on a également figuré en traits tirets sur un lampe à halogène 27, son réflecteur 28 et un condenseur 29.

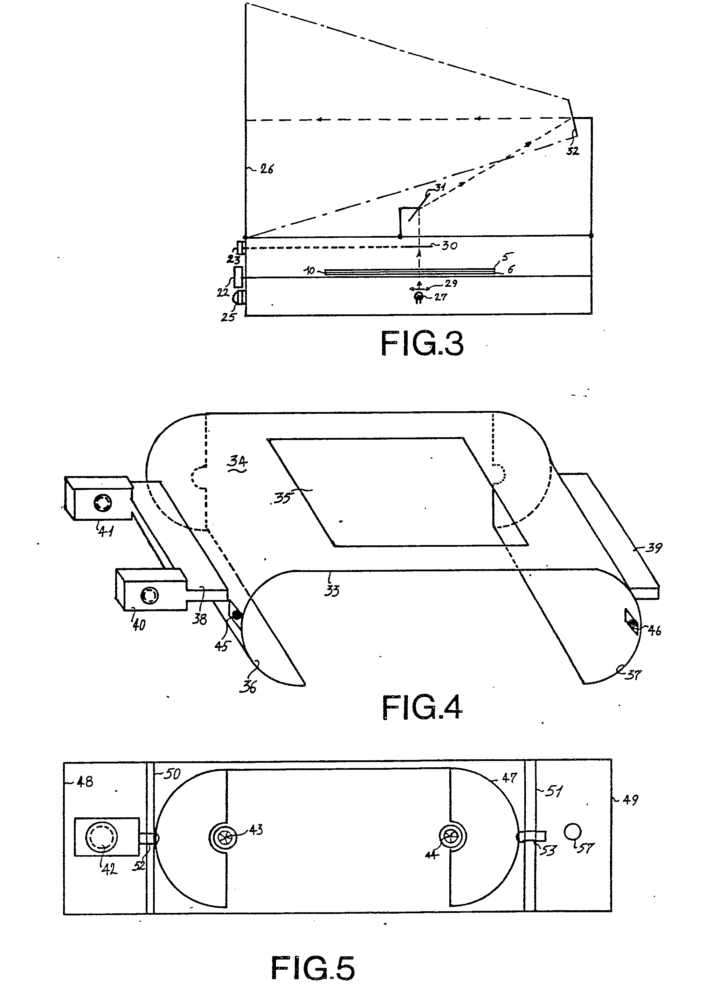

Sur la coupe de la Fig. 3, on retrouve, dans le boîtier, la lampe 27, le condenseur 29, les plaques 5 et 6 prenant en sandwich le film 10, un objectif 30, un premier miroir 31 renvoyant le faisceau lumineux reçu de 27 à travers 10 vers un second miroir 32 qui renvoit la lumière sur la face arrière de l'écran 26. Les boutons 23, 22 et le voyant 25 sont également indiqués. La coupe de la Fig. 3 permet d'illustrer le fonctionnement optique de l'appareil qui est tout à fait classique.

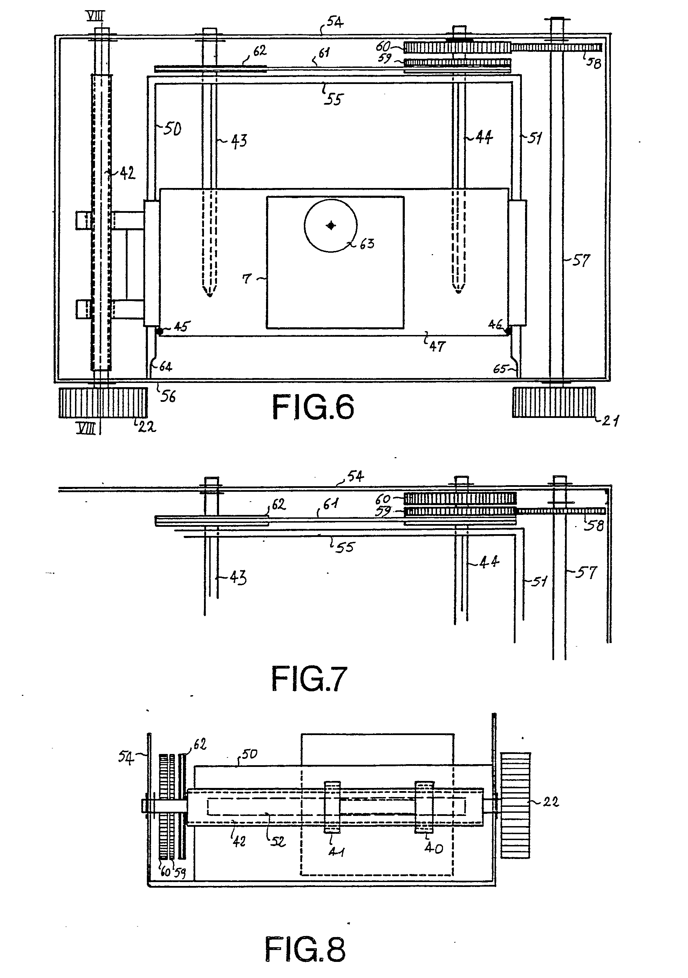

A la Fig. 4, on a représenté en perspective en berceau destiné à recevoir la cassette 19. Il est formé essentiellement d'une feuille rigide 33 comportant une face plane supérieure 34, avec une échancrure 35, correspondant à la zone 7 de la cassette, la face plane étant prolongée à droite et à gauche par deux demi-cylindres 36 et 37, dont le diamètre commun correspond au diamètre extérieur commun de 1 et 2. Chaque demi-cylindre 36 ou 37 porte, à l'extérieur, le long de sa génératrice horizontale, un coulisseau 38 ou 39, respectivement. De plus, le coulisseau 38 porte, à ses deux extrémités, vers l'extérieur, deux petits blocs 40 et 41 qui comportent des trous taraudés alignés qui définissent l'axe d'une vis sans fin 42, Fig. 6, entraînée par le bouton 22. Les fonds arrière des demi-cylindres 36 et 37 forment des voiles présentant des ouvertures pour les axes 43 et 44 d'entraînement des axes de bobine 8 et 9. Enfin, le berceau comporte, devant les coulisseaux 38 et 39, des logements pour des billes de verrouillage 45 et 46 classiques, pouvant prendre une position déverrouillée vers l'extérieur et une position verrouillée vers l'intérieur. Des systèmes de verrouillage autres que celui qui vient d'être décrit pourraient également être utilisés.

A la Fig. 5, on a représenté le berceau 47 vu de face, monté dans le boîtier de l'appareil de projection. Ce boîtier est limité par deux faces latérales 48 et 49, mais surtout comporte deux cloisons verticales 50 et 51 qui comportant chacune une rainure 52 ou 53, disposées horizontalement, dans lesquelles coulissent respectivement les coulisseaux 38 et 39. En fait, le berceau 47 est porté par le bas des rainures 52 et 53.

La vue de dessus de la Fig. 6 montre les autres parties du boîtier de la Fig. 5, c'est à dire un fond 54, une paroi verticale 55, perpendiculaire aux parois 50 et 51 est placée légèrement en avant du fond 54, et une face avant 56, dans laquelle est découpée une ouverture permettant l'introduction de la cassette, cette ouverture étant normalement fermée par le volet 20, Fig. 2. La vis sans fin 42, au bout de laquelle est monté le bouton 22, est portée par des paliers du fond 54 et de la face avant 56. Comme la vis 42 passe à travers les trous taraudés des blocs 40 et 41, on peut en actionnant le bouton 22 déplacer en translation le berceau 47 dans les rainures 52 et 53. Un axe 57, au bout duquel est monté le bouton 21, est porté par des paliers du fond 54 et de la face avant 56. L'axe 57 est solidaire d'un engrenage 58 à proximité du fond 54. L'axe 44 est porté par des paliers du fond 54 et de la cloison 55. Il est pourvu de deux engrenages 59 et 60 placés l'un devant l'autre entre 55 et 54. L'engrenage 59 comporte une gorge circulaire sur laquelle est montée une courroie 61 qui passe sur un réa 62 monté sur l'axe 43 entre 51 et 55. Dans ce volume, les axes 43 et 44 forment des broches sur lesquelles s'embrochent les axes creux 8 et 9 de la cassette montée dans le berceau 47. Les axes 43 et 44 sont évidemment cannelés pour pouvoir entraîner les axes 8 et 9 en rotation.

L'axe 57 peut non seulement tourner en agissant sur le bouton 21, mais peut être enfoncé, comme le montre la Fig. 6, position dans laquelle son engrenage 58 engrène l'engrenage 60 qui est solidaire de l'axe 44, ou tiré vers l'avant, comme le montre la Fig. 7, position dans laquelle son engrenage 58 engrène l'engrenage 59 qui est monté fou sur l'axe 44.

Il en résulte, qu'en position enfoncée, en tournant le bouton 21 dans le sens inverse des aiguilles d'une montre, on embobine le film autour de 9, entraîné par 44 et qu'en position tiré, on peut en tournant le bouton 21 dans le sens contraire réembobiner le film autour de 8, entraîné par 43, 62, 61 et 59. Une mauvaise manoeuvre est facilement décelable car le film ne bouge pas.

Il apparaît ainsi qu'en manoeuvrant le bouton 21 on peut faire défiler le film sous la région 63 de droite à gauche ou de gauche à droite. Par ailleurs, en manoeuvrant le bouton 22, on translate le berceau 47, qui porte la cassette et donc le film, c'est à dire qu'on déplace d'avant en arrière ou vice versa le film sous la région 63. La région 63 étant celle qui se trouve sur l'axe optique de l'appareil, il apparaît donc que les boutons 21 et 22 permettent, de centrer l'image que l'on désire consulter sur l'écran 10.

La Fig. 8 est une vue en coupe le long de la ligne VIII—VIII de la Fig. 6, où l'on retrouve le bouton 22, l'axe 42, les blocs 40 est 41 et la cloison 50.

En se référant à nouveau à la Fig. 6, il apparaît que les parties internes avant des cloisons 50 et 51 sont amincies en 64 et 65, pour permettre aux dispositifs de verrouillage 45 et 46 de s'effacer.

Pour se servir de l'appareil de projection à cassettes de films, suivant l'invention, on déplace à l'aide du bouton 22 le berceau vide vers l'avant. On suppose que les rainures 52 et 53 sont fermées vers l'avant pour former une butée. Quand le berceau est venu en butée, les dispositifs de verrouillage 45 et 46 sont déverrouillés, ce qui permet l'introduction de la cassette dans le berceau. La cassette est poussée à fond. Ensuite, dès que recule le berceau, contenant la cassette, le verrouillage immobilise la cassette dans le berceau.

En fonction de la vue projetée, l'opérateur déroule ou enroule le film. On peut par exemple prévoir sur le bord du film un piétage. Quand on a trouvé la bonne zone, on centre l'image par 21 et 22, puis éventuellement on agit sur le bouton 23 qui, en permettant le changement d'objectif, assure un grossissement correct de l'image que l'on veut consulter.

Il faut encore comprendre que la cassette et l'appareil permettent de visionner le microfilm, soit sur toute sa largeur et sur une longueur équivalente à la fenêtre transparente 7 de la cassette, soit sur une partie réduite en utilisant des objectifs de grossissements différents, associés à des diaphragmes réglables ou une glissière à trous se logeant au-dessus du condenseur.

On peut également prévoir une motorisation de la table de lecture, les boutons de commande mécanique manuelle étant remplacés par des boutons poussoirs commandant des micro-moteurs montés, notamment, aux bouts des arbres 42 et 57.

Par ailleurs, on peut prévoir sur le bord du film un piétage magnétique qui, associé à une tête de lecture appropriée, permet d'effectuer une recherche automatique.

Sur les parties transparentes de la plaque 5, des lignes de repère indexées horizontales peuvent être gravées, tracées ou dessinées pour pouvoir repérer, à la projection, la zone latérale recherchée.

L'appareil peut, par exemple, servir de lecteur de cartes dans un véhicule, les cartes à consulter étant enregistrées sur le film.

**Revendications**

1. Appareil de projection pour microfilm en bande (10) comportant une cassette (19) pourvue de deux magasins (1, 2) comportant chacun un axe de bobine (8, 9) autour desquels s'enroule le microfilm, les magasins étant réunis par deux plaques (5, 6) formant entre elles un couloir de défilement pour le microfilm et étant transparentes dans une zone (7) dudit couloir, l'appareil comprenant un boîtier contenant une lampe (27), un condenseur (29), un objectif (30), un écran (26), des moyens (43, 44) pour entraîner en rotation les axes (8, 9), et un moyen support (47) dans lequel se loge une cassette (19), ledit moyen support (47) étant suspendu au boîtier, déplaçable en translation par rapport au boîtier dans une direction perpendiculaire à celle du défilement du microfilm entre les plaques (5, 6) et à celle de la lumière entre le condenseur (29) et l'objectif (30), et comportant une partie transparente (35) en regard de ladite zone d'exposition (7), la zone transparente (35) et la zone d'exposition (7) se trouvant sur le trajet lumineux entre le condenseur (29) et l'objectif (30), caractérisé en ce qu'il comprend encore des moyens d'entraînement en translation et de réglage transversal fin (40, 41, 42) de la position du moyen support (47) par rapport au boîtier et en ce que les moyens (43, 44) d'entrainement des axes (8, 9) des bobines sont solidaires du boitier.

2. Appareil suivant la revendication 1, caractérisé en ce que le moyen support (47) comporte, sur chaque côté transversal, des coulisseaux (38, 39) coulissant dans des rainures (52, 53) du boîtier, au moins un des coulisseaux comportant une partie (40 et/ou 41) portant un filetage qui engrène le filetage d'une vis sans fin (42) montée rotative dans le boîtier.

3. Appareil suivant la revendication 2, caractérisé en ce que des parties (40, 41) de coulisseau comportent des trous taraudés dans lesquels tournent une ou des vis sans fin montées rotatives dans le boîtier.

4. Appareil suivant l'une des revendications 1 à 3, caractérisé en ce que les moyens d'entrainement des axes (8, 9) et/ou les moyens d'entrainement en translation (40, 41, 42) sont motorisés.

5. Appareil suivant la revendication 1, caractérisé en ce que les moyens (43, 44) d'entraînement des axes (8, 9) sont couplés l'un à l'autre.

6. Appareil suivant l'une des revendications 1 à 5, caractérisé en ce qu'il comporte une pluralité d'objectifs de grossissement (30), qui associés à des diaphragmes, permettent d'observer sur le même écran (26) une partie plus ou moins grande du microfilm (10).

7. Appareil suivant l'une des revendications 1 à 6, caractérisé en ce que des voiles sont prévus, sur les faces avant et arrière de la cassette, pour la rendre entièrement étanche aux poussières.

8. Appareil suivant l'une des revendications 1 à 7, caractérisé en ce que chaque magasin (1, 2) de la cassette comporte des moyens appropriés (13 et 15, et 14 et 16) pour serrer les spires des bobines (11 et 12).

9. Appareil suivant l'une des revendications 1 à 8, caractérisé en ce que la surface supérieure transparente (7) de la plaque 5 de la cassette comporte des lignes de repère indexées dans la direction du défilement du microfilm.

**Patentansprüche**

1. Projektionsgerät zum Betrachten von Mikrofilmkassetten, mit einer Kassette (19), die mit zwei Magazinen (1, 2) versehen ist, von denen jedes eine Spulenachse (8, 9) hat, um welche der Mikrofilm gewickelt ist, wobei die Magazine durch zwei Platten (5, 6) verbunden sind, die einen Durchgangsweg zum Hindurchführen de Mikrofilms zwischen ihnen bilden und die in einer Zone (7) dieses Durchgangsweges transparent sind, wobei das Gerät ferner ein Gehäuse mit einer Lampe (27) aufweist, eine Objektiv-Projektionslinse (30), einen Bildschirm (26), Einrichtungen (43, 44) zum Drehen der Achsen (8, 9) sowie eine Halterung (47) zur Aufnahme der Kassette (19), wobei die Halterung am Gehäuse aufgehängt ist und relativ zum Gehäuse in einer Richtung normal zur Richtung des Mikrofilms beweglich ist, der sich zwischen den Platten (5, 6) bewegt, und zu der Richtung des Lichtweges zwischen der Kondensorlinse (29) und der Objektivlinse (30), ferner mit einem transparenten Abschnitt (35) vor der Belichtungszone (7), wobei der transparente Abschnitt (35) und die Belichtungszone (7) in dem Lichtweg zwischen der Kondensorlinse (29) und der Objektivlinse (30) liegen, dadurch gekennzeichnet, daß es eine Einrichtung (40, 41, 42) für einen Translations-Antrieb und für eine feine Quereinstellung aufweist, um die Halterung (47) relativ zu dem Gehäuse zu positionieren, und daß die Antriebseinrichtung (43, 44) für die Spulenachsen (8, 9) integral mit dem Gehäuse ausgebildet ist.

2. Projektionsgerät nach Anspruch 1, dadurch gekennzeichnet, daß die Halterung (47) an jeder Querseite Schieber (38, 39) aufweist, die in Schlitzen (52, 53) im Gehäuse gleiten, daß wenigstens ein Schieber einen Teil (40 und/oder 41) aufweist, der mit einem Gewinde versehen ist, das in Eingriff mit dem Gewinde einer Endlosschraube (42) steht, die drehbar im Gehäuse eingebaut ist.

3. Projektionsgerät nach Anspruch 2, dadurch gekennzeichnet, daß die Schieber-Teile (40, 41) Gewindebohrungen haben, in denen eine oder mehrere Schrauben, die drehbar im Gehäuse eingebaut sind, drehbar sind.

4. Projektionsgerät nach einem der Ansprüche 1—3, dadurch gekennzeichnet, daß die Antriebseinrichtung für die Achsen (8, 9) und/oder die Translations-Antriebseinrichtung (40, 41, 42) motorisch antreibbar ist.

5. Projektionsgerät nach Anspruch 1, dadurch gekennzeichnet, daß die Antriebseinrichtungen (43, 44) für die Achsen (8, 9) miteinander gekoppelt sind.

6. Projektionsgerät nach einem der Ansprüche 1—5, dadurch gekennzeichnet, daß es eine Mehrzahl von Vergrößerungslinsen (30) aufweist, denen Blenden zugeordnet sind, die es ermöglichen, einen mehr oder weniger großen Teil des Mikrofilms (10) auf demselben Bildschirm (26) darzustellen.

7. Projektionsgerät nach einem der Ansprüche 1—6, dadurch gekennzeichnet, daß Abdeckungen vorgesehen sind an der vorderen und der hinteren Seite der Kassette, um diese vollständig staubdicht zu machen.

8. Projektionsgerät nach einem der Ansprüche 1—7, dadurch gekennzeichnet, daß jedes Magazin (1, 2) der Kassette geeignete Mittel (13 und 15, sowie 14 und 16) aufweist, um die Windungen der Spulen (11, 12) anzuziehen.

9. Projektionsgerät nach einem der Ansprüche 1—8, dadurch gekennzeichnet, daß die obere transparente Fläche (7) der Kassettenplatte (5) Index-Markierungslinien aufweist, die längs der Bewegungsrichtung des Mikrofilms verlaufen.

**Claims**

1. A projection apparatus for viewing microfilm cassettes, having a cassette (19) provided with two magazines (1, 2) each comprising a spool axis (8, 9) about which the microfilm is wound, the magazines being joined by two plates (5, 6) forming a passageway channel for moving the microfilm between them and being transparent in a zone (7) of said channel, the apparatus comprising a housing including a light (27), a condensing lens (29), an objective projecting lens (30), a viewing screen (26), means (43, 44) for rotating the axes (8, 9) and support means (47) for receiving the cassette (19), said support means hanging onto the housing, movable in translation relative to the housing, in a direction normal to the direction of microfilm moving between the plates (5, 6) and to the direction of the light path between the condensing lens (29) and the objective projecting lens (30), and comprising a transparent portion (35) in front of said exposure zone (7), the transparent zone (35) and the exposure zone (7) being placed across the light path between the condensing lens (29) and the objective projecting lens (30), characterized in that it further comprises translation driving and fine transverse adjustment means (40, 41, 42) for positioning the support means (47) relative to the housing, and in that the driving means (43, 44) for the spool axes (8, 9) are integral with the housing.

2. An apparatus according to claim 1, characterized in that the support means (47) comprises, at each transverse side, rams (38, 39) sliding in slots (52, 53) provided in the housing, at least one ram having a part (40 and/or 41) provided with a threading engaged with the one of an endless screw (42) rotatably mounted in the housing.

3. An apparatus according to claim 2, characterized in that ram parts (40, 41) have threaded holes in which one or several screws rotatably mounted in the housing rotate.

4. An apparatus according to one of claims 1—3, characterized in that the driving means for the axes (8, 9) and/or the translation driving means (40, 41, 42) are motorized.

5. An apparatus according to claim 1, characterized in that the driving means (43, 44) for the axes (8, 9) are inter locked.

6. An apparatus according to one of claims 1—5, characterized in that it comprises a plurality of magnifying power lens (30), which associated with diaphragms allow displaying a more or less important part of the microfilm (10) on the same screen.

7. An apparatus according to one of claims 1—6, characterized in that veils are provided, on the front and rear faces of the cassette, to make it completely dust tight.

8. An apparatus according to one of claims 1—7, characterized in that each magazine (1, 2) of the cassette comprises suitable means (13 and 15, and 14 and 16) for tightening the turns of the spools (11, 12).

9. An apparatus according to one of claims 1—8, characterized in that the upper transparent surface (7) of the cassette plate (5) comprises indexed marking lines directed along the microfilm moving direction.

FIG.2

FIG.1

**0 050 175**

FIG.3

FIG.4

FIG.5

2

0 050 175

FIG.6

FIG.7

FIG.8

3